# EUROPÄISCHE PATENTSCHRIFT

(11) **EP 2 890 854 B1**
(45) Veröffentlichungstag und Bekanntmachung des Hinweises auf die Patenterteilung: **22.06.2016**
(21) Anmeldenummer: 13735279.5
(22) Anmeldetag: 11.07.2013
(51) Int. Cl.: E04G 21/04, F16C 11/04

(54) **BETONVERTEILERMAST**
CONCRETE DISTRIBUTOR MAST
MÂT DISTRIBUTEUR DE BÉTON

(30) Priorität: 31.08.2012 DE 102012215469
(43) Veröffentlichungstag der Anmeldung: 08.07.2015
(73) Patentinhaber: Putzmeister Engineering GmbH, 72631 Aichtal (DE)
(72) Erfinder: RUPPEL, Jochen, 63628 Bad Soden-Salmünster Kerbersdorf (DE); HASEL, Peter, 70794 Filderstadt (DE); GUSENBAUER, Martin, 72555 Metzingen (DE); RIVINIUS, Martin, 75387 Neubulach (DE); RIEBENSTAHL, Roman, 63571 Gelnhausen (DE); WESTERMANN, Karl, 72141 Walddorfhäslach (DE)
(74) Vertreter: Wolf, Eckhard
(86) Internationale Anmeldenummer: PCT/EP2013/064639
(87) Internationale Veröffentlichungsnummer: WO 2014/032840

(56) Entgegenhaltungen:
- EP-A- 2 050 881
- WO-A1-2006/095239
- DE-A1- 2 016 345
- DE-A1-102007 001 913
- DE-A1-102007 016 354
- DE-A1-102010 027 635
- FR-A2- 2 367 153
- GB-A- 2 132 676
- JP-A- 2000 199 240

## Beschreibung

Die Erfindung betrifft einen Betonverteilermast mit mehreren, relativ zueinander bewegbaren Mastarmen, die an Koppelstellen gelenkig mit einem Drehkopf und miteinander verbunden sind. Die Mastarme weisen im Bereich der Koppelstellen Gelenkpunkte auf, an denen als Kinematikelemente aus der Gruppe Hydraulikzylinder, Druckstange und Umlenkhebel ausgebildete Antriebs- und Koppelglieder eines die Mastarmbewegung auslösenden Koppelgetriebes angelenkt sind. Mindestens einer der Gelenkpunkte weist dabei ein den Mast quer überbrückendes, eine Lagerachse definierendes Gelenkbauteil auf.

Es ist ein Betonverteilermast dieser Art bekannt (DE 10 2007 001 913 A). In den meist als Kastenprofil ausgebildeten Mastarmen werden dort an den Gelenkpunkten rohrförmige Buchsen eingeschweißt, auf deren Innenseite Lagerschalen eingebracht werden. Durch die Einschweißbuchsen sind Gelenkbolzen hindurchgesteckt, die sich dank der Lagerschalen um ihre eigene Achse relativ zur Buchse verdrehen können. Buchse, Lagerschalen und Bolzen bilden hierbei das eigentliche Drehlager des Gelenks. Die Bolzen stehen seitlich so weit über den Mastarm über, dass die für das Koppelgetriebe benötigten Kinematikelemente, wie Druckstange oder Umlenkhebel am Bolzen angebracht und verdrehsicher fixiert werden können. Als nachteilig bei der bekannten Konstruktion wird deren konstruktiver Aufwand angesehen, der vor allem durch die hierbei notwendige Einschweißbuchse begründet ist. Dies gilt umso mehr, als für jedes Koppelgetriebe eine Mehrzahl Gelenkpunkte mit den hierfür vorgesehenen Einschweißbuchsen vorhanden sind.

Das Dokument DE 10 2007 001 913 A offenbart einen Betonverteilermast gemäß dem Oberbegriff der Ansprüche 1, 5 und 9.

Ausgehend hiervon liegt der Erfindung die Aufgabe zugrunde, den bekannten Betonverteilermast der eingangs angegebenen Art durch einen vereinfachten

Aufbau der einzelnen Gelenkpunkte im Bereich der Koppelstellen zu verbessern.

Zur Lösung dieser Aufgabe werden die in den Ansprüchen 1, 5 und 9 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, dass die Anzahl der benötigten Teile für jeden Gelenkpunkt beim Entfall der Einschweißbuchsen reduziert werden kann und dadurch erhebliche Kosten und Gewichtseinsparungen erzielt werden können. Um dies zu erreichen, wird gemäß einer ersten Ausführungsvariante der Erfindung vorgeschlagen, dass das Gelenkbauteil einen mit dem Mastarm drehfest verbundenen, an seinen freien Enden nach beiden Seiten über den Mastarm nach außen überstehenden Gelenkbolzen aufweist, dass auf den über den Mastarm überstehenden Enden des Gelenkbolzens Lagerschalen für die Drehlagerung eines Antriebs- oder Koppelglieds des Koppelgetriebes angeordnet sind, und dass mindestens einer der Mastarme eine als Kastenprofil ausgebildete Schweißkonstruktion mit einem Obergurt und einem Untergurt sowie zwei in seitlichem Abstand voneinander angeordneten Stegblechen aufweist, wobei der Gelenkbolzen im Bereich des Gelenkpunkts den Zwischenraum zwischen den Stegblechen überbrückt und mit seinen freien Enden durch je einen Durchbruch in den Stegblechen nach außen hindurchgreift und dort mit den Stegblechen drehfest verbunden ist.

Um eine leichtere Bauweise zu erzielen, wird gemäß einer vorteilhaften oder alternativen Ausgestaltung der Erfindung vorgeschlagen, dass der Gelenkbolzen aus zwei getrennten, je eines der überstehenden Enden aufweisenden und an der Trennstelle miteinander verschweißten Bolzenhälften zusammengesetzt ist. Eine weitere Verbesserung in dieser Hinsicht wird erreicht, wenn die Bolzenhälften hohl ausgebildet sind.

Die Lagerschalen sind nicht mehr im Inneren der nun entfallenden Einschweißbuchse angebracht, sondern auf der Außenseite des überstehenden Gelenkbolzens. Dank des außen liegenden Lagers können sich die darauf angebrachten Koppelglieder relativ zum Gelenkbolzen verdrehen. Damit bilden bei der erfindungsgemäßen Lösung der Gelenkbolzen, die Lagerschale und das daran fixierte Koppelglied das Lager im Gelenkpunkt. Die Lagerschalen und die Koppelglieder sind vorteilhafterweise auf den Enden des Gelenkbolzens gegen ein Abziehen gesichert.

Eine zweite Ausführungsvariante der Erfindung sieht vor, dass das Gelenkbauteil zwei miteinander fluchtende, mit dem Mastarm drehfest verbundene, nach je einer Seite über den Mastarm nach außen überstehende und mit dem Mastarm drehfest verbundene Gelenkzapfen aufweist, und dass auf den über den Mastarm überstehenden Enden der Gelenkzapfen Lagerschalen für die Drehlagerung eines Antriebs- oder Koppelglieds des Koppelgetriebes oder eines benachbarten Mastarms angeordnet sind. Die Lagerzapfen der zweiten Ausführungsvariante ergeben sich im Wesentlichen dadurch, dass die Gelenkbolzen der ersten Ausführungsvariante in ihrem mittleren Bereich aufgetrennt und verkürzt sind.

Vorteilhafterweise werden die Gelenk- oder Zapfenbolzen und die Stegbleche zusätzlich mit einer mit ihrer Nahtwurzel gegen die Ringpartie anliegenden Schweiß- oder Klebenaht miteinander verbunden.

Gemäß einer dritten Ausführungsvariante der Erfindung, bei welcher an einem der Koppelglieder ein dieses quer überbrückendes, eine Lagerachse definierendes Gelenkbauteil angeordnet ist, weist das Gelenkbauteil einen mit dem Koppelglied drehfest verbundenen, an seinen freien Enden nach beiden Seiten über das eine Koppelglied nach außen überstehenden und mit dem einen Koppelglied drehfest verbundenen Gelenkbolzen auf, wobei auf den über das eine Koppelglied überstehenden Enden des Gelenkbolzens Lagerschalen für die Drehlagerung eines weiteren Antriebs- oder Koppelglieds des Koppelgetriebes oder eines benachbarten Mastarms angeordnet sind. Das Koppelglied kann dabei zwei in seitlichem Abstand voneinander angeordnete Stegbleche aufweisen, während der Gelenkbolzen im Bereich des Gelenkpunkts den Zwischenraum zwischen den Stegblechen überbrückt und mit seinen freien Enden durch je einen Durchbruch in den Stegblechen nach außen hindurchgreift und dort mit den Stegblechen drehfest verbunden, vorzugsweise verschweißt ist. Grundsätzlich ist es auch hier möglich, den Gelenkbolzen aus zwei getrennten, je eines der überstehenden Enden aufweisenden und an der Trennstelle miteinander verschweißten Bolzenhälften zusammenzusetzen.

Im Folgenden wird die Erfindung anhand der in der Zeichnung in schematischer Weise dargestellten Ausführungsbeispiels näher erläutert. Es zeigen
- Fig. 1a: eine Seitenansicht einer Autobetonpumpe mit einem Betonverteilermast;
- Fig. 1b und c: einen vergrößerten Ausschnitt aus Fig. 1a und einen Ausschnitt mit zwei Koppelgliedern aus Fig. 1b;
- Fig. 2: einen Schnitt durch eine Gelenkstelle entlang der Schnittlinie II-II der Fig. 1a und 1b (erste Ausführungsvariante);
- Fig. 3: ein abgewandeltes Ausführungsbeispiel in einer Schnittdarstellung entsprechend Fig. 2 (zweite Ausführungsvariante);
- Fig. 4: einen Schnitt durch eine Gelenkstelle entlang der Schnittlinie IV-IV der Fig. 1b und 1c in vergrößerter Darstellung (dritte Ausführungsvariante);

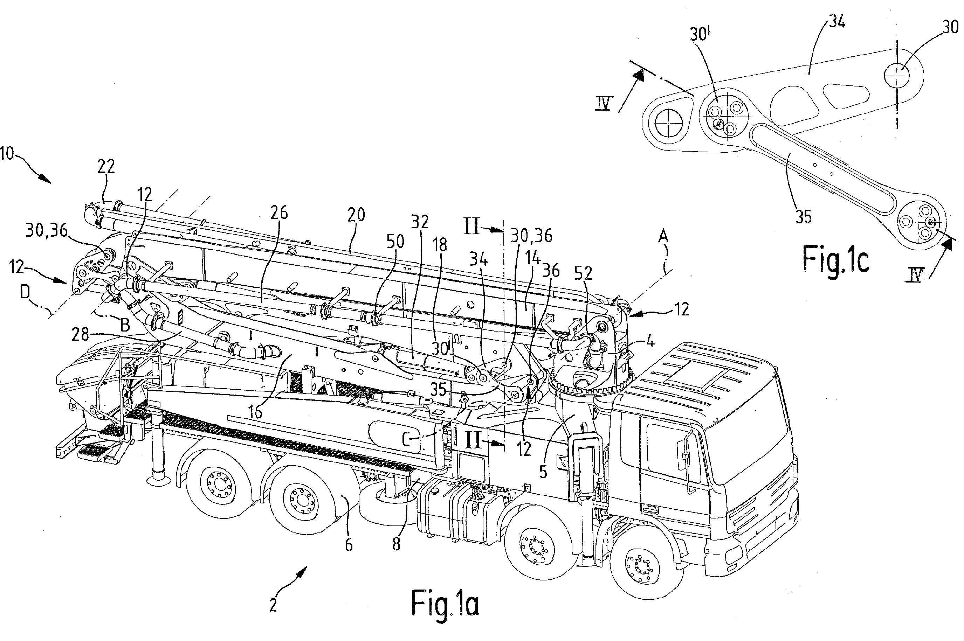

Die Autobetonpumpe 2 gemäß Fig. 1a hat ein Fahrgestell 6 mit einem Unterbau 8, der einen Betonverteilermast 10 trägt. Der Betonverteilermast 10 ist mit seinem Drehkopf 4 an einem Mastbock 5 des Unterbaus 8 aufgenommen und hat Knickgelenke 12, in denen die Mastarme 14,16,18,20 um horziontale Drehachsen A,B,C,D geschwenkt werden können. Über den Betonverteilermast 10 ist eine Betonförderleitung 28 geführt, die Rohrbögen 22 und Rohrsegmente 26 aufweist, die durch Rohrkupplungen 50 und Drehkupplungen 52 miteinander verbunden sind.

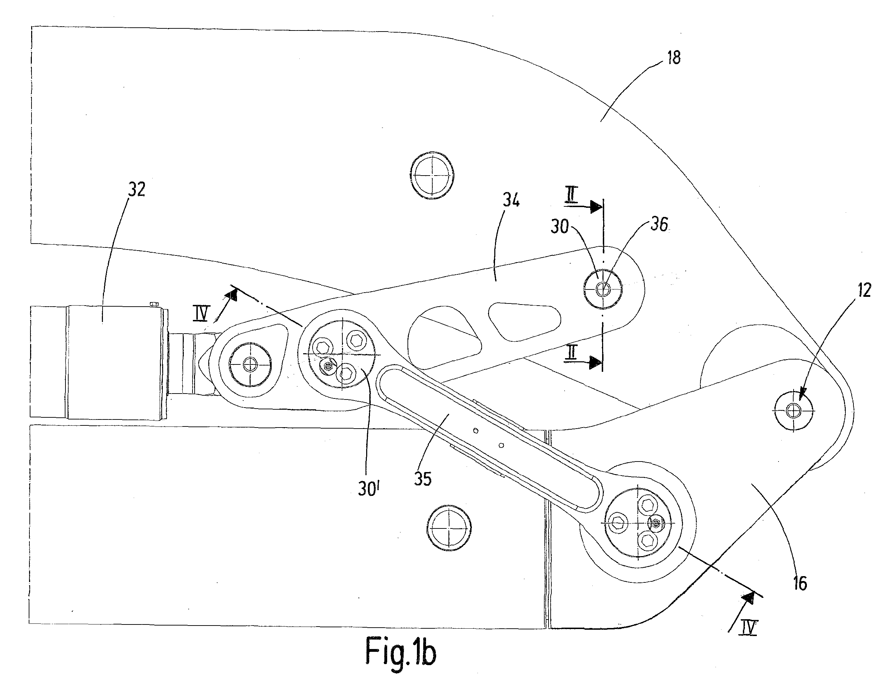

Die Fig. 1 b, 2 und 3 zeigen den Mastarm 18 in verschiedenen vergrößerten Darstellungen. Der Mastarm 18 weist wie auch die Mastarme 14,16 und 20 eine als Kastenprofil ausgebildete Schweißkonstruktion auf. Die vorzugsweise aus Stahl bestehenden Mastarme haben jeweils einen Obergurt 54 und einen Untergurt 56, die durch zwei einander gegenüberliegende Stegbleche 58,60 miteinander verbunden sind.

Die Mastarme des Betonverteilermasts sind im Bereich der Knickgelenke 12 an Koppelstellen gelenkig miteinander verbunden. An den Koppelstellen weisen die Mastarme Gelenkpunkte 30 auf, an denen Antriebs- und Koppelglieder 32,34,35 je eines die Mastarmbewegung auslösenden Koppelgetriebes angelenkt sind. Ein Teil der Gelenkpunkte 30 des Koppelgetriebes sind durch ein den Mastarm 18 quer überbrückendes, eine Lagerachse 36 definierendes Gelenkbauteil gebildet.

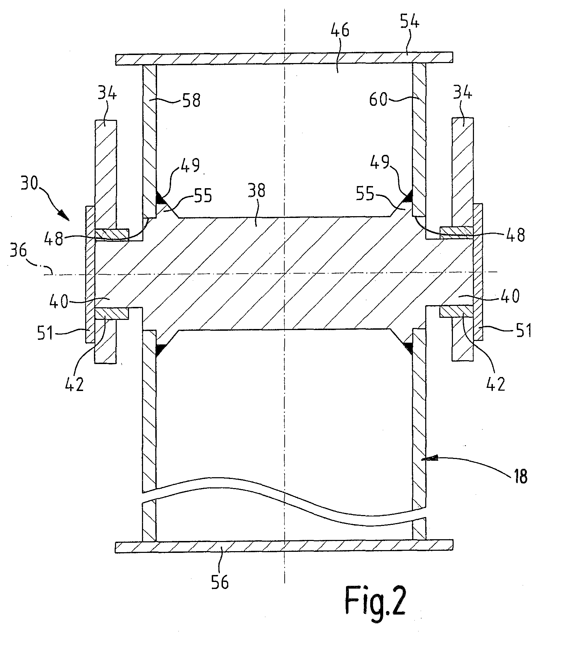

Das Ausführungsbeispiel nach Fig. 2 sieht vor, dass die Gelenkbauteile einen mit dem jeweiligen Mastarm 18 drehfest verbundenen, an seinen freien Enden 40 nach den beiden Seiten über den Mastarm 18 nach außen überstehenden und mit dem Mastarm 18 drehfest verbundenen Gelenkbolzen 38 aufweisen, und dass auf den über den Mastarm überstehenden Enden 40 des Gelenkbolzens 38 Gleitlagerschalen 42 für eines der Antriebs- oder Koppelglieder 34 des Koppelgetriebes angeordnet sind. Bei diesem Ausführungsbeispiel, bei welchem der Mastarm 18 ein Kastenprofil mit zwei im seitlichen Abstand voneinander angeordneten Stegblechen 58,60 aufweist, überbrückt der Gelenkbolzen 38 den Zwischenraum 46 zwischen den Stegblechen 58,60 und ragt mit seinen freien Enden 40 durch je einen Durchbruch 48 in den Stegblechen 58,60 nach außen hindurch. Der Gelenkbolzen 38 weist außerdem zwei im Abstand der Stegbleche 58,60 voneinander angeordnete, radial über die Bolzenoberfläche überstehende Ringpartien 55 oder Ringelemente auf, wobei der Gelenkbolzen 38 und die Stegbleche 58,60 zusätzlich mit einer mit ihrer Nahtwurzel gegen die Ringpartie oder das Ringelement anliegenden Schweiß- oder Klebenaht 49 miteinander verbunden sind. An der Außenseite des Gelenkbolzens sind die Lagerschalen 42 und die Koppelglieder 34 mittels eines aufgesteckten oder angeschraubten Kopfes 51 gegen ein Abziehen von dem Gelenkbolzen 38 gesichert.

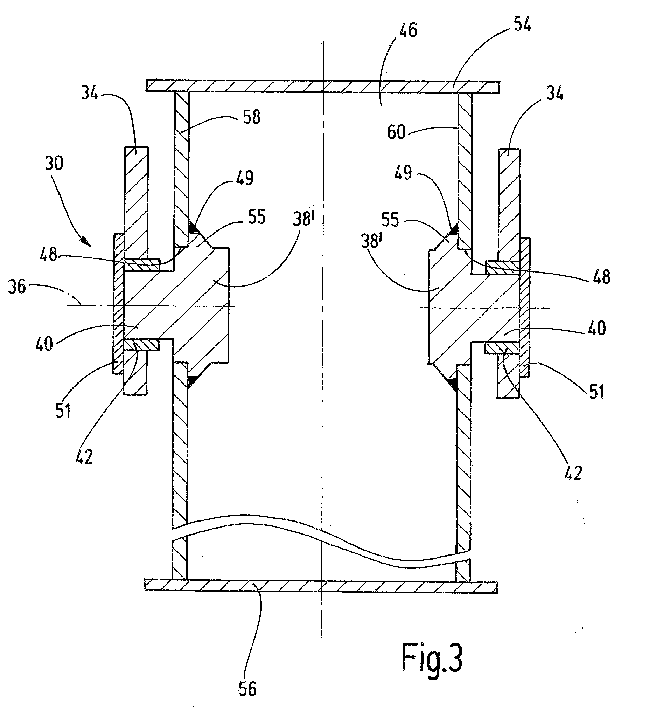

Das Ausführungsbeispiel nach Fig. 3 unterscheidet sich von dem Ausführungsbeispiel nach Fig. 2 dadurch, dass die Gelenkbauteile zwei mit dem jeweiligen Mastarm 18 drehfest verbundene, an ihren freien Enden 40 nach den beiden Seiten über den Mastarm 18 nach außen überstehende und mit dem Mastarm 18 drehfest verbundene Gelenkzapfen 38' aufweisen, die mit ihren Enden 40 über den Mastarm nach außen überstehen. Auf den überstehenden Enden 40 der Gelenkzapfen sind wiederum Gleitlagerschalen 42 für eines der Koppelglieder 34 des Koppelgetriebes angeordnet. Auch bei diesem Ausführungsbeispiel weist der Mastarm 18 ein Kastenprofil mit zwei in seitlichem Abstand voneinander angeordneten Stegblechen 58,60 auf. Die Gelenkzapfen 38' greifen in den Zwischenraum 46 ein und ragen mit ihren freien Enden 40 durch je einen Durchbruch 48 in den Stegblechen 58,60 nach außen hindurch und sind ähnlich wie der Gelenkbolzen 38 gemäß Fig. 2 mittels einer Schweißnaht 49 drehfest mit den Stegblechen 58,60 verbunden. An der Außenseite der Gelenkzapfen 38' sind die Lagerschalen 42 und die Koppelglieder 34 mittels eines aufgesteckten oder angeschraubten Kopfes 51 gegen ein Abziehen von dem Gelenkzapfen 38' gesichert.

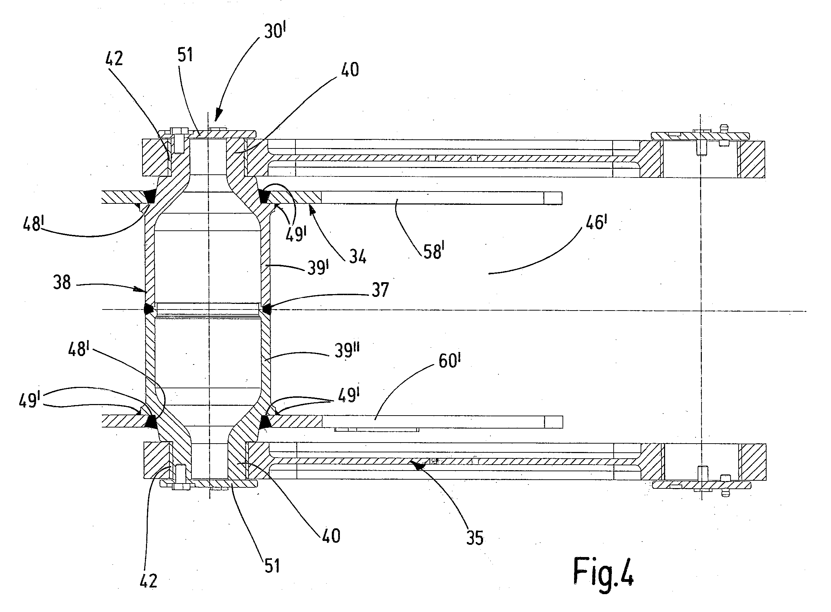

Das Ausführungsbeispiel nach Fig. 4 unterscheidet sich von den Ausführungsbeispielen nach Fig. 2 und 3 dadurch, dass der Gelenkbolzen 38 mit einem der Koppelglieder 34 und nicht mit einem der Mastarme verschweißt ist. Bei dem gezeigten Ausführungsbeispiel weist das betreffende Koppelglied 34 zwei in seitlichem Abstand voneinander angeordnete Stegbleche 58',60' auf. Der Gelenkbolzen 38 überbrückt den Zwischenraum 46' zwischen den Stegblechen 58',60' und ragt mit seinen freien Enden 40 durch je einen Durchbruch 48' in den Stegblechen 58',60' nach außen hindurch und ist mittels einer doppelten Schweißnaht 49' drehfest mit den Stegblechen verbunden. Der Gelenkbolzen 38 ist bei diesem Ausführungsbeispiel aus zwei getrennten, je eines der überstehenden Enden 40 aufweisenden Bolzenhälften 39',39" zusammengesetzt, die an der mittigen Trennstelle 37 miteinander verschweißt sind. An den überstehenden Enden 40 des Gelenkbolzens 38 sind die Lagerschalen 42 und ein weiteres Koppelglied 35 mittels eines aufgesteckten oder angeschraubten Kopfes 51 gegen ein Abziehen von dem Gelenkbolzen 38 gesichert.

Der Drehkopf 4 und die sich an den Drehkopf 4 oder an die Mastarme 14,16,18,20 anschließenden benachbarten Mastarme bilden zusammen mit den zugehörigen Antriebs- und Koppelgliedern 32,34,35 ein Koppelgetriebe für eine Relativbewegung der Mastarme im Bereich der Knickachsen A,B,C,D. Die Koppelgetriebe sind dabei bevorzugt als Watt'sche oder Stephenson'sche Ketten ausgebildet.

Zusammenfassend ist folgendes festzuhalten: Die Erfindung bezieht sich auf einen Betonverteilermast 10 mit mehreren relativ zueinander bewegbaren Mastarmen 14,16,18,20. Die Mastarme sind an Koppelstellen gelenkig miteinander verbunden und weisen im Bereich der Koppelstellen Gelenkpunkte 30 auf, an denen Antriebs- und Koppelglieder 32,34,35 eines die Mastarmbewegung auslösenden Koppelgetriebes angelenkt sind. An den Gelenkpunkten 30 der Mastarme befinden sich Gelenkbauteile, die den jeweiligen Mastarm 18 quer überbrücken und eine Lagerachse 36 definieren. Eine Besonderheit der Erfindung besteht darin, dass mindestens eines der Gelenkbauteile einen mit dem Mastarm 18 drehfest verbundenen, an seinen freien Enden nach beiden Seiten über den Mastarm nach außen überstehenden und mit dem Mastarm drehfest verbundenen Gelenkbolzen 38 aufweist. Auf den über den Mastarm überstehenden Enden 40 des Gelenkbolzens 38 sind Lagerschalen 42 für die Drehlagerung eines benachbarten Antriebs- oder Koppelgliedes 32,34 des Koppelgetriebes angeordnet. Anstelle des Gelenkbolzens 38 können auch zwei miteinander fluchtende Gelenkzapfen 38' als Gelenkbauteile verwendet werden.

### Bezugszeichenliste

- 2: Autobetonpumpe
- 4: Drehkopf
- 5: Mastbock
- 6: Fahrgestell
- 8: Unterbau
- 10: Betonverteilermast
- 12: Knickgelenke
- 14,16,18,20: Mastarme
- 22: Rohrbogen
- 26: Rohrsegment
- 28: Betonförderleitung
- 30,30': Gelenkpunkt
- 32: Antriebsglieder (Hydraulikzylinder)
- 34,35: Koppelglieder
- 36: Lagerachse
- 37: Trennstelle
- 38: Gelenkbolzen
- 38': Gelenkzapfen
- 39',39": Bolzenhälften
- 40: freie Enden
- 42: Lagerschale
- 46: Zwischenraum
- 48: Durchbruch
- 49,49': Schweißnaht
- 50: Rohrkupplung
- 51: Kopf
- 52: Drehkupplung
- 54: Obergurt
- 55: Ringpartien
- 56: Untergurt
- 58,60,58',60': Stegbleche
- A,B,C,D: Drehachsen

## Patentansprüche

1. Betonverteilermast mit mehreren um horizontale Drehachsen relativ zueinander verschwenkbaren Mastarmen (14, 16, 18, 20), die an Koppelstellen gelenkig mit einem Drehkopf (4) und miteinander verbunden sind, wobei die Mastarme im Bereich der Koppelstellen Gelenkpunkte (30) aufweisen, an denen als Kinematikelemente aus der Gruppe Hydraulikzylinder (32), Druckstange und Umlenkhebel (34), ausgebildete Antriebs- und Koppelglieder (32, 34, 35) eines die Mastarmbewegung auslösenden Koppelgetriebes angelenkt sind, und wobei mindestens einer der Gelenkpunkte (30) ein den Mastarm quer überbrückendes, eine Lagerachse (36) definierendes Gelenkbauteil aufweist, **dadurch gekennzeichnet, dass** das Gelenkbauteil einen an seinen freien Enden (40) nach beiden Seiten über den Mastarm (18) nach außen überstehenden und mit dem Mastarm (18) drehfest verbundenen Gelenkbolzen (38) aufweist, dass auf den über den Mastarm (18) überstehenden Enden (40) des Gelenkbolzens (38) Lagerschalen (42) für die Drehlagerung eines Antriebs- oder Koppelglieds (34) des Koppelgetriebes angeordnet sind, und dass mindestens einer der Mastarme (18) eine als Kastenprofil ausgebildete Schweißkonstruktion mit einem Obergurt und einem Untergurt sowie zwei in seitlichem Abstand voneinander angeordneten Stegblechen (58, 60) aufweist, und dass der Gelenkbolzen (38) im Bereich des Gelenkpunktes (30) den Zwischenraum (46) zwischen den Stegblechen (58, 60) überbrückt und mit seinen freien Enden (40) durch je einen Durchbruch (48) in den Stegblechen (58, 60) nach außen hindurchgreift und dort mit den Stegblechen (58, 60) drehfest verbunden ist..

2. Verteilermast nach Anspruch 1, **dadurch gekennzeichnet, dass** der mindestens eine Gelenkbolzen (38) an den Stegblechen (58, 60) angeschweißt ist.

3. Verteilermast nach Anspruch 1 oder 2, **dadurch gekennzeichnet, dass** der Gelenkbolzen (38) zwei im Abstand der Stegbleche (58, 60) voneinander angeordnete, radial über die Bolzenoberfläche überstehende Ringpartien (55) oder Ringelemente aufweist, wobei der Gelenkbolzen (38) und die Stegbleche (58, 60) zusätzlich mit einer mit ihrer Nahtwurzel gegen die Ringpartie oder das Ringelement anliegenden Schweiß- oder Klebenaht (49) miteinander verbunden sind.

4. Verteilermast nach einem der Ansprüche 1 bis 3, **dadurch gekennzeichnet, dass** der Gelenkbolzen (38) aus zwei getrennten, je eines der überstehenden Enden aufweisenden und an ihrer Trennstelle (37) miteinander verschweißten Bolzenhälften (39', 39") zusammengesetzt ist.

5. Betonverteilermast mit mehreren um horizontale Drehachsen relativ zueinander verschwenkbaren Mastarmen (14, 16, 18, 20), die an Koppelstellen gelenkig mit einem Drehkopf (4) und miteinander verbunden sind, wobei die Mastarme im Bereich der Koppelstellen Gelenkpunkte (30) aufweisen, an denen als Kinematikelemente aus der Gruppe Hydraulikzylinder (32), Druckstange und Umlenkhebel (34), ausgebildete Antriebs- und Koppelglieder (32, 34) eines die Mastarmbewegung auslösenden Koppelgetriebes angelenkt sind, und wobei mindestens einer der Gelenkpunkte (30) ein am Mastarm angeordnetes, eine Lagerachse (36) definierendes Gelenkbauteil aufweist, **dadurch gekennzeichnet, dass** das Gelenkbauteil zwei miteinander fluchtende nach je einer Seite über den Mastarm (18) nach außen überstehende und mit dem Mastarm (18) drehfest verbundene Gelenkzapfen (38') aufweist, dass auf den über den Mastarm (18) überstehenden Enden (40) der Gelenkzapfen (38') Lagerschalen (42) für die Drehlagerung eines Antriebs- oder Koppelglieds (34) des Koppelgetriebes angeordnet sind, und dass mindestens einer der Mastarme (18) eine als Kastenprofil ausgebildete Schweißkonstruktion mit einem Obergurt und einem Untergurt sowie zwei in seitlichem Abstand voneinander angeordneten Stegblechen (58, 60) aufweist, und dass die Gelenkzapfen (38') im Bereich des Gelenkpunktes (30) in den Zwischenraum (46) zwischen den Stegblechen (58, 60) eingreifen und mit ihren freien Enden (40) durch je einen Durchbruch (48) in den Stegblechen (58, 60) nach außen hindurchgreifen und dort mit den Stegblechen (58, 60) drehfest verbunden sind.

6. Verteilermast nach Anspruch 5, **dadurch gekennzeichnet, dass** die Gelenkzapfen (38') an den Stegblechen (58, 60) angeschweißt sind.

7. Verteilermast nach Anspruch 5 oder 6, **dadurch gekennzeichnet, dass** die Gelenkzapfen (38') je eine radial über die Zapfenoberfläche überstehende Ringpartie (55) oder ein Ringelement aufweisen, wobei die Gelenkzapfen (38') und die zugehörigen Stegbleche (58, 60) zusätzlich mit einer mit ihrer Nahtwurzel gegen die Ringpartie oder das Ringelement anliegenden Schweiß- oder Klebenaht (49) miteinander verbunden sind.

8. Verteilermast nach einem der Ansprüche 5 bis 7, **dadurch gekennzeichnet, dass** die beiden Gelenkzapfen (38') an eine Trennstelle (37) im Bereich ihrer einander zugewandten Enden unter Bildung eines einstückigen Gelenkbolzens (38) miteinander verschweißt sind.

9. Betonverteilermast mit mehreren um horizontale Drehachsen relativ zueinander verschwenkbaren Mastarmen (14, 16, 18, 20), die an Koppelstellen gelenkig mit einem Drehkopf (4) und miteinander verbunden sind, wobei die Mastarme im Bereich der Koppelstellen Gelenkpunkte (30) aufweisen, an denen als Kinematikelemente aus der Gruppe Hydraulikzylinder (32), Druckstange und Umlenkhebel (34), ausgebildete Antriebs- und Koppelglieder (32, 34) eines die Mastarmbewegung auslösenden Koppelgetriebes angelenkt sind, und wobei mindestens einer der Gelenkpunkte (30') ein eines der Koppelglieder quer überbrückendes, eine Lagerachse (36) definierendes Gelenkbauteil aufweist, **dadurch gekennzeichnet, dass** das Gelenkbauteil einen an seinen freien Enden (40) nach beiden Seiten über das eine Koppelglied nach außen überstehenden und mit dem einen Koppelglied drehfest verbundenen Gelenkbolzen (38) aufweist, und dass auf den über das eine Koppelglied überstehenden Enden (40) des Gelenkbolzens (38) Lagerschalen (42) für die Drehlagerung eines weiteren Antriebs- oder Koppelglieds (34) des Koppelgetriebes oder eines benachbarten Mastarms angeordnet sind, dass das eine Koppelglied zwei in seitlichem Abstand voneinander angeordnete Stegbleche (58', 60') aufweist, und dass der Gelenkbolzen (38) im Bereich des Gelenkpunktes (30') den Zwischenraum (46) zwischen den Stegblechen (58', 60') überbrückt und mit seinen freien Enden (40) durch je einen Durchbruch (48') in den Stegblechen (58', 60') nach außen hindurchgreift und dort mit den Stegblechen (58', 60') drehfest verbunden ist.

10. Verteilermast nach Anspruch 9, **dadurch gekennzeichnet, dass** der Gelenkbolzen (38) an den Stegblechen (58', 60') angeschweißt ist.

11. Verteilermast nach Anspruch 9 oder 10, dadurch gekenneichnet, dass der Gelenkbolzen (38) zwei im Abstand der Stegbleche (58',60') voneinander angeordnete, radial über die Bolzenoberfläche überstehende Ringpartien (55) oder Ringelemente aufweist, wobei der Gelenkbolzen (38) und die Stegbleche (58', 60') zusätzlich mit einer mit ihrer Nahtwurzel gegen die Ringpartie oder das Ringelement anliegenden Schweiß- oder Klebenaht (49) miteinander verbunden sind.

12. Verteilermast nach einem der Ansprüche 9 bis 11, **dadurch gekennzeichnet, dass** der Gelenkbolzen aus zwei getrennten, je eines der überstehenden Enden (40) aufweisenden und an ihrer Trennstelle (37) miteinander verschweißten Bolzenhälften (39', 39") zusammengesetzt ist.

13. Verteilermast nach einem der Ansprüche 1 bis 12, **dadurch gekennzeichnet, dass** die Lagerschalen (42) und die Koppelglieder (34) auf den Enden (40) des Gelenkbolzens (38) oder der Gelenkzapfen (38') gegen ein Abziehen gesichert sind.

14. Verteilermast nach einem der Ansprüche 1 bis 13, **dadurch gekennzeichnet, dass** die Koppelgetriebe zwischen den Mastarmen (14, 16, 18, 20) als Watt'sche oder Stephenson'sche Ketten ausgebildet sind.

## Claims

1. A concrete distributor mast with a plurality of mast arms (14, 16, 18, 20) which are pivotable relative to one another about horizontal axes of rotation and are connected in an articulated manner to a rotary head (4) and to one another at coupling points, wherein, in the region of the coupling points, the mast arms have hinge points (30) to which drive and coupling members (32, 34, 35) of a coupling mechanism triggering the mast arm movement are coupled, which drive and coupling members (32, 34, 35) are designed as kinematic elements from the group consisting of hydraulic cylinder (32), push rod and deflecting lever (34), and wherein at least one of the hinge points (30) has a hinge component which spans the mast arm transversely and defines a bearing axis (36), **characterized in that** the hinge component has a hinge pin (38) which protrudes outward at the free ends (40) thereof beyond the mast arm (18) on both sides and is connected to the mast arm (18) for rotation therewith, and **in that** bearing shells (42) for the rotational mounting of a drive or coupling member (34) of the coupling mechanism are arranged on the ends (40) of the hinge pin (38) that protrude beyond the mast arm (18), and **in that** at least one of the mast arms (18) has a welded construction which is designed as a box profile and has an upper boom and a lower boom and also two web plates (58, 60) arranged at a lateral distance from each other, and **in that**, in the region of the hinge point (30), the hinge pin (38) spans the intermediate space (46) between the web plates (58, 60) and reaches with its free ends (40) outward through a respective aperture (48) in the web plates (58, 60) and is connected there to the web plates (58, 60) for rotation therewith.

2. The distributor mast as claimed in claim 1, **characterized in that** the at least one hinge pin (38) is welded to the web plates (58, 60).

3. The distributor mast as claimed in claim 1 or 2, **characterized in that** the hinge pin (38) has two ring portions (55) or ring elements which are arranged at the distance between the web plates (58, 60) from each other and protrude radially beyond the pin surface, wherein the hinge pin (38) and the web plates (58, 60) are additionally connected to each other by a weld seam or adhesive seam (49) bearing with the seam root thereof against the ring portion or the ring element.

4. The distributor mast as claimed in one of claims 1 to 3, **characterized in that** the hinge pin (38) is composed of two separate pin halves (39', 39") which each have one of the protruding ends and are welded to each other at the point of separation (37) thereof.

5. A concrete distributor mast with a plurality of mast arms (14, 16, 18, 20) which are pivotable relative to one another about horizontal axes of rotation and are connected in an articulated manner to a rotary head (4) and to one another at coupling points, wherein, in the region of the coupling points, the mast arms have hinge points (30) to which drive and coupling members (32, 34) of a coupling mechanism triggering the mast arm movement are coupled, which drive and coupling members (32, 34) are designed as kinematic elements from the group consisting of hydraulic cylinder (32), push rod and deflecting lever (34), and wherein at least one of the hinge points (30) has a hinge component which is arranged on the mast arm and defines a bearing axis (36), **characterized in that** the hinge component has two pivots (38') which are aligned with each other, protrude outward to one side each beyond the mast arm (18) and are connected to the mast arm (18) for rotation therewith, and **in that** bearing shells (42) for the rotational mounting of a drive or coupling member (34) of the coupling mechanism are arranged on the ends (40) of the pivots (38') that protrude beyond the mast arm (18), and **in that** at least one of the mast arms (18) has a welded construction which is designed as a box profile and has an upper boom and a lower boom and also two web plates (58, 60) which are arranged at a lateral distance from each other, and **in that**, in the region of the hinge point (30), the pivots (38') engage in the intermediate space (46) between the web plates (58, 60) and reach with their free ends (40) outward through a respective aperture (48) in the web plates (58, 60) and are connected there to the web plates (58, 60) for rotation therewith.

6. The distributor mast as claimed in claim 5, **characterized in that** the pivots (38') are welded to the web plates (58, 60).

7. The distributor mast as claimed in claim 5 or 6, **characterized in that** the pivots (38') each have a ring portion (55) protruding radially beyond the pivot surface, or a ring element, wherein the pivots (38') and the associated web plates (58, 60) are additionally connected to each other by a weld or adhesive seam (49) bearing with the seam root thereof against the ring portion or the ring element.

8. The distributor mast as claimed in one of claims 5 to 7, **characterized in that** the two pivots (38') are welded to each other at a point of separation (37) in the region of their ends facing each other so as to form a single-piece hinge pin (38).

9. A concrete distributor mast with a plurality of mast arms (14, 16, 18, 20) which are pivotable relative to one another about horizontal axes of rotation and are connected in an articulated manner to a rotary head (4) and to one another at coupling points, wherein, in the region of the coupling points, the mast arms have hinge points (30) to which drive and coupling members (32, 34) of a coupling mechanism triggering the mast arm movement are coupled, which drive and coupling members (32, 34) are designed as kinematic elements from the group consisting of hydraulic cylinder (32), push rod and deflecting lever (34) and wherein at least one of the hinge points (30) has a hinge component which spans one of the coupling members transversely and defines a bearing axis (36), **characterized in that** the hinge component has a hinge pin (38) which protrudes outward at the free ends (40) thereof beyond the one coupling member on both sides and is connected to the one coupling member for rotation therewith, and **in that** bearing shells (42) for the rotational mounting of a further drive or coupling member (34) of the coupling mechanism or of an adjacent mast arm are arranged on the ends (40) of the hinge pin (38) that protrude beyond the one coupling member, **in that** the one coupling member has two web plates (58', 60') which are arranged at a lateral distance from each other, and **in that**, in the region of the hinge point (30'), the hinge pin (38) spans the intermediate space (46) between the web plates (58', 60') and reaches with its free ends (40) outward through a respective aperture (48') in the web plates (58', 60') and is connected there to the web plates (58', 60') for rotation therewith.

10. The distributor mast as claimed in claim 9, **characterized in that** the hinge pin (38) is welded to the web plates (58', 60').

11. The distributor mast as claimed in claim 9 or 10, **characterized in that** the hinge pin (38) has two ring portions (55) or ring elements which are arranged at the distance between the web plates (58', 60') from each other and protrude radially beyond the pin surface, wherein the hinge pin (38) and the web plates (58', 60') are additionally connected to each other by a weld seam or adhesive seam (49) bearing with the seam root thereof against the ring portion or the ring element.

12. The distributor mast as claimed in one of claims 9 to 11, **characterized in that** the hinge pin is composed of two separate pin halves (39', 39") which each have one of the protruding ends (40) and are welded to each other at the point of separation (37) thereof.

13. The distributor mast as claimed in one of claims 1 to 12, **characterized in that** the bearing shells (42) and the coupling members (34) are secured on the ends (40) of the hinge pin (38) or of the pivots (38') against being pulled off.

14. The distributor mast as claimed in one of claims 1 to 13, **characterized in that** the coupling mechanisms between the mast arms (14, 16, 18, 20) are designed as Watt's or Stephenson's chains.

## Revendications

1. Mât distributeur de béton, composé de plusieurs bras (14, 16, 18, 20) qui sont aptes à pivoter les uns par rapport aux autres autour d'axes horizontaux de rotation, et sont reliés à une tête rotative (4), et les uns aux autres, de manière articulée dans des zones d'accouplement, lesdits bras du mât étant dotés, dans la région desdites zones d'accouplement, de points d'articulation (30) auxquels sont rattachés, de manière articulée, des organes (32, 34, 35) d'entraînement et de couplage d'une transmission de couplage déclenchant le mouvement desdits bras du mât, lesquels organes sont réalisés en tant qu'éléments cinématiques faisant partie du groupe incluant un vérin hydraulique (32), une tige de poussée et un levier de renvoi (34), au moins l'un desdits points d'articulation (30) comportant une pièce structurelle d'articulation qui franchit le bras du mât, dans le sens transversal, et définit un axe de palier (36), **caractérisé par le fait que** la pièce structurelle d'articulation présente un axe d'articulation (38) faisant saillie, au niveau de ses extrémités libres (40), de part et d'autre vers l'extérieur au-delà du bras (18) du mât, et relié audit bras (18) du mât avec verrouillage en rotation ; **par le fait que** des coques de palier (42), dévolues au montage rotatif d'un organe (34) d'entraînement ou de couplage de la transmission de couplage, sont installées sur les extrémités (40) dudit axe d'articulation (38) qui font saillie au-delà dudit bras (18) du mât ; **par le fait qu'**au moins l'un des bras (18) dudit mât comporte une structure soudée réalisée sous la forme d'un profilé en caisson comprenant une membrure supérieure et une membrure inférieure, ainsi que deux tôles d'entretoisement (58, 60) placées latéralement à distance l'une de l'autre ; et **par le fait que** ledit axe d'articulation (38) comble l'espace interstitiel (46) entre les tôles d'entretoisement (58, 60) dans la région du point d'articulation (30), franchit de part en part vers l'extérieur, par ses extrémités libres (40), un évidement respectif (48) pratiqué dans lesdites tôles d'entretoisement (58, 60), et est verrouillé en rotation avec lesdites tôles d'entretoisement (58, 60) dans cette zone.

2. Mât distributeur selon la revendication 1, **caractérisé par le fait que** l'axe d'articulation (38), à présence minimale, est rapporté par soudage sur les tôles d'entretoisement (58, 60).

3. Mât distributeur selon la revendication 1 ou 2, **caractérisé par le fait que** l'axe d'articulation (38) est pourvu de deux parties annulaires (55) ou éléments annulaires, distant(e)s l'un(e) de l'autre suivant l'espacement des tôles d'entretoisement (58, 60) et faisant radialement saillie au-delà de la surface dudit axe, ledit axe d'articulation (38) et lesdites tôles d'entretoisement (58, 60) étant additionnellement solidarisés au moyen d'un joint (49) de soudure ou d'adhésif en applique, par sa racine, contre la partie annulaire ou l'élément annulaire.

4. Mât distributeur selon l'une des revendications 1 à 3, **caractérisé par le fait que** l'axe d'articulation (38) est composé de deux moitiés distinctes (39', 39") qui sont munies de l'une respective des extrémités saillantes et sont reliées l'une à l'autre, par soudage, au niveau de leur zone de séparation (37).

5. Mât distributeur de béton, composé de plusieurs bras (14, 16, 18, 20) qui sont aptes à pivoter les uns par rapport aux autres autour d'axes horizontaux de rotation, et sont reliés à une tête rotative (4), et les uns aux autres, de manière articulée dans des zones d'accouplement, lesdits bras du mât étant dotés, dans la région desdites zones d'accouplement, de points d'articulation (30) auxquels sont rattachés, de manière articulée, des organes (32, 34) d'entraînement et de couplage d'une transmission de couplage déclenchant le mouvement desdits bras du mât, lesquels organes sont réalisés en tant qu'éléments cinématiques faisant partie du groupe incluant un vérin hydraulique (32), une tige de poussée et un levier de renvoi (34), au moins l'un desdits points d'articulation (30) comportant une pièce structurelle d'articulation qui est implantée sur le bras du mât et définit un axe de palier (36), **caractérisé par le fait que** la pièce structurelle d'articulation comprend deux tenons d'articulation (38') mutuellement alignés, qui font saillie vers l'extérieur au-delà du bras (18) du mât, en direction d'un côté respectif, et sont verrouillés en rotation avec ledit bras (18) du mât ; **par le fait que** des coques de palier (42), dévolues au montage rotatif d'un organe (34) d'entraînement ou de couplage de la transmission de couplage, sont installées sur les extrémités (40) desdits tenons d'articulation (38') qui font saillie au-delà dudit bras (18) du mât ; **par le fait qu'**au moins l'un des bras (18) dudit mât comporte une structure soudée réalisée sous la forme d'un profilé en caisson comprenant une membrure supérieure et une membrure inférieure, ainsi que deux tôles d'entretoisement (58, 60) placées latéralement à distance l'une de l'autre ; et **par le fait que** lesdits tenons d'articulation (38') pénètrent dans l'espace interstitiel (46) entre les tôles d'entretoisement (58, 60), dans la région du point d'articulation (30), franchissent de part en part vers l'extérieur, par leurs extrémités libres (40), un évidement respectif (48) pratiqué dans lesdites tôles d'entretoisement (58, 60), et sont verrouillés en rotation avec lesdites tôles d'entretoisement (58, 60) dans cette zone.

6. Mât distributeur selon la revendication 5, **caractérisé par le fait que** les tenons d'articulation (38') sont rapportés par soudage sur les tôles d'entretoisement (58, 60).

7. Mât distributeur selon la revendication 5 ou 6, **caractérisé par le fait que** les tenons d'articulation (38') sont pourvus, respectivement, d'une partie annulaire (55) ou d'un élément annulaire faisant radialement saillie au-delà de la surface desdits tenons, lesdits tenons d'articulation (38'), et les tôles d'entretoisement (58, 60) associées, étant additionnellement solidarisés au moyen d'un joint (49) de soudure ou d'adhésif en applique, par sa racine, contre la partie annulaire ou l'élément annulaire.

8. Mât distributeur selon l'une des revendications 5 à 7, **caractérisé par le fait que** les deux tenons d'articulation (38') sont soudés l'un à l'autre dans une zone de séparation (37), dans la région de leurs extrémités pointant l'une vers l'autre, en formant un axe d'articulation (38) monobloc.

9. Mât distributeur de béton, composé de plusieurs bras (14, 16, 18, 20) qui sont aptes à pivoter les uns par rapport aux autres autour d'axes horizontaux de rotation, et sont reliés à une tête rotative (4), et les uns aux autres, de manière articulée dans des zones d'accouplement, lesdits bras du mât étant dotés, dans la région desdites zones d'accouplement, de points d'articulation (30) auxquels sont rattachés, de manière articulée, des organes (32, 34) d'entraînement et de couplage d'une transmission de couplage déclenchant le mouvement desdits bras du mât, lesquels organes sont réalisés en tant qu'éléments cinématiques faisant partie du groupe incluant un vérin hydraulique (32), une tige de poussée et un levier de renvoi (34), au moins l'un desdits points d'articulation (30') comportant une pièce structurelle d'articulation qui franchit l'un des organes de couplage, dans le sens transversal, et définit un axe de palier (36), **caractérisé par le fait que** la pièce structurelle d'articulation présente un axe d'articulation (38) qui fait saillie, au niveau de ses extrémités libres (40), de part et d'autre vers l'extérieur au-delà de l'organe de couplage susmentionné et est relié audit organe de couplage susmentionné, avec verrouillage en rotation ; **par le fait que** des coques de palier (42), dévolues au montage rotatif d'un organe supplémentaire (34) d'entraînement ou de couplage de la transmission de couplage, ou d'un bras du mât occupant une position voisine, sont installées sur les extrémités (40) dudit axe d'articulation (38) qui font saillie au-delà dudit organe de couplage susmentionné ; **par le fait que** ledit organe de couplage susmentionné est pourvu de deux tôles d'entretoisement (58', 60') placées latéralement à distance l'une de l'autre ; et **par le fait que** ledit axe d'articulation (38) comble l'espace interstitiel (46) entre les tôles d'entretoisement (58', 60') dans la région du point d'articulation (30'), franchit de part en part vers l'extérieur, par ses extrémités libres (40), un évidement respectif (48') pratiqué dans lesdites tôles d'entretoisement (58', 60'), et est verrouillé en rotation avec lesdites tôles d'entretoisement (58', 60') dans cette zone.

10. Mât distributeur selon la revendication 9, **caractérisé par le fait que** l'axe d'articulation (38) est rapporté par soudage sur les tôles d'entretoisement (58', 60').

11. Mât distributeur selon la revendication 9 ou 10, **caractérisé par le fait que** l'axe d'articulation (38) est pourvu de deux parties annulaires (55) ou éléments annulaires, distant(e)s l'un(e) de l'autre suivant l'espacement des tôles d'entretoisement (58', 60') et faisant radialement saillie au-delà de la surface dudit axe, ledit axe d'articulation (38) et lesdites tôles d'entretoisement (58', 60') étant additionnellement solidarisés au moyen d'un joint (49) de soudure ou d'adhésif en applique, par sa racine, contre la partie annulaire ou l'élément annulaire.

12. Mât distributeur selon l'une des revendications 9 à 11, **caractérisé par le fait que** l'axe d'articulation est composé de deux moitiés distinctes (39', 39") qui sont munies de l'une respective des extrémités saillantes (40) et sont reliées l'une à l'autre, par soudage, au niveau de leur zone de séparation (37).

13. Mât distributeur selon l'une des revendications 1 à 12, **caractérisé par le fait que** les coques de palier (42), et les organes de couplage (34), sont protégés à l'encontre d'un déboîtement aux extrémités (40) de l'axe d'articulation (38) ou des tenons d'articulation (38').

14. Mât distributeur selon l'une des revendications 1 à 13, **caractérisé par le fait que** les transmissions de couplage sont réalisées sous la forme de chaînes de Watt ou de Stephenson entre les bras (14, 16, 18, 20) dudit mât.
